# EUROPEAN PATENT APPLICATION

(11) **EP 1 541 629 A1**
(43) Date of publication of application: **15.06.2005**
(21) Application number: 03792763.9
(22) Date of filing: 21.08.2003
(51) Int. Cl.: C08L 1/00

(54) **BIODEGRADABLE RESIN COMPOSITION**

(30) Priority: 22.08.2002 JP 2002242027
(71) Applicant: Itabashi, Kazuko, Fuchu City, Tokyo 183-0055 (JP)
(72) Inventor: Itabashi, Kazuko, Fuchu City, Tokyo 183-0055 (JP)
(74) Representative: Setna, Rohan P.
(86) International application number: PCT/JP2003/010557
(87) International publication number: WO 2004/018555

(57) **Abstract**

A biodegradable resin composition **characterized in that** solid grains of given diameter obtained by pulverizing rice having an outer layer tissue are bonded to each other with a biodegradable resin. The biodegradable resin composition has a porous structure as a whole so as to exert excellent properties as a biodegradable resin. The production cost thereof can be reduced by the use of industrial waste containing outer layer tissue portions of rice produced in rice processing which have been disposed of. The biodegradable resin composition contributes toward prevention of environmental disruption through effective utilization of waste material.

## Description

### Technical Field

The present invention relates to a biodegradable resin composition which is decomposed under natural environmental conditions without losing its properties as a synthetic resin.

### Background Art

Synthetic resins produced from petroleum are not decomposed when placed under natural environmental conditions after disposal. When they are burnt, they generate harmful substances typified by dioxin or CO₂. Environmental pollution caused by the genera-purpose synthetic resin products discarded after use has become a problem in recent years. Biodegradable resins which can be decomposed under natural environmental conditions are therefore under development because of the necessity of environmental conservation. Biodegradable resins imparted with a carbon cycle function are expected to be put on the market as a product taking into account the responsibility of manufacturers of synthetic resin products in advance. Such biodegradable resins are required to have both properties similar to natural materials and those similar to synthetic resins. Described specifically, they must be degradable under natural environmental conditions and after degradation, return to the soil, while they must be softened by heating and owing to their plastic fluidity, they can be formed into a desired shape after melting. They are therefore required to be hydrophobic, crystalline and resistant to hydrolysis at room temperature, different from natural materials. As a biodegradable resin material well-balanced between stability and biodegradability, disclosed in Japanese Patent Laid-Open No. 2001-323177 is a technology of mixing, in a synthetic biodegradable resin, a substance accelerating the biodegradation speed thereof and a substance suppressing the biodegradation speed at a specific ratio, thereby adjusting the balance between stability and biodegradability to a desired level. Although starches derived from grains can be given as an example of such a substance accelerating the biodegradation speed, the resin added therewith often undergo discoloration or coloration or deterioration in physical properties by high temperature treatment. In addition, in order to keep the physical properties (performances) of the resin at a predetermined level, such a substance cannot be added freely. A number of products obtained by adding a special function to a resin material itself have recently been developed. For example, products imparted with an antibacterial action, products imparted with a negative ion increasing effect, and packages or containers effective for preserving freshness of foods have come to be used popularly. Products using a biodegradable resin as a material cannot fully satisfy the needs of consumers if their selling point is only that they have a function as a synthetic resin and biodegradability after disposal. In Japanese Patent Laid-Open No. 11-148017, disclosed is a technology of kneading bamboo powder or short fibers in a biodegradable resin to simultaneously heighten its strength and impart it with antibacterial. In Japanese Patent Application No. 2001-72785, proposed is a functional biodegradable resin molded or formed product imparted with functions such as deodorizing, antibacterial, anti-allergic and anti-oxidative properties by mixing a tea-derived substance in a biodegradable resin molded or formed product.

Synthetic biodegradable resins such as polylactic acid and aliphatic polyesters are however expensive compared with the existing synthetic resins so that they are not yet used popularly because of poor cost competitive power. Kneading of a natural biodegradable resin such as starch derived from grains with such a synthetic biodegradable resin leads to a cost reduction, however, it is impossible to add the natural biodegradable resin in an amount exceeding 90 wt.% and in addition, the grain materials for starch are not inexpensive. There is therefore a demand for the development of a proper material which is usable by kneading, inexpensive and capable of actualizing effective use of the waste.

### Disclosure of the Invention

An object of the present invention is to, for overcoming the problems as described above, to provide a large value-added biodegradable resin material which is capable of achieving a cost reduction without causing deterioration in physical properties of the biodegradable resin and also achieving the effective use of the waste which will otherwise lead to environmental destruction, and is imparted with useful functions; and a preparation process of the material.

According to the present invention, a biodegradable resin composition is obtained by binding, with a biodegradable resin, solid particles of a predetermined particle size available by pulverizing rice having an outer layer tissue. Such solid particles derived from rice contain a plurality of high molecular organic matters such as starch and cellulose. They are bound firmly together by a biodegradable resin while keeping the solid state and maintaining the predetermined particle size, which facilitates mixing of a large amount of them with the biodegradable resin without damaging its physical properties. This leads to a reduction in the preparation cost of a biodegradable resin composition. In particular, the outer layer tissue of rice is rich in high molecular organic matters other than starch and has a high bonding property with a biodegradable resin. As the outer layer tissue of rice, powders remaining after polishing of rice and remnants of rice washings which come out from plants of processing rice into no-wash rice or rinse-free rice, white bran by-produced in the sake brewing step, or remnants in rice cracker manufacturing plants, which are usually regarded wastes, can be used. Biodegradable resin compositions obtained using such wastes are porous materials containing therein rice-derived fine solid particles in the bonded form and show effects of keeping freshness and increasing negative ions. The term "outer layer tissue of rice" as used herein means a tissue layer including hull, seed coat and starch layer which are usually called a bran layer of brown rice, and an outside portion except a white core at the center of the endosperm; the term "remnants of rice washings" means an industrial residue remaining after filtration of rice washings or waste liquid generated upon shaving or polishing of the outer layer of rice after removal of bran from rice; and the term" freshness keeping effect" means an effect of preventing or retarding quality deterioration which will otherwise occur owing to the maturation, modification or putrefaction of fresh foods or fresh flowers.

In preferred aspects of the invention, the above-described solid particles of a predetermined particle size are composed mainly of the outer layer tissue of rice. This makes it possible to obtain a biodegradable resin composition having particularly excellent physical properties. When the outer layer tissue is mainly supplied from white bran produced in a sake brewing step or remnants of rice washings, an industrial waste discharged from the sake brewing step or from plants of processing rice into no-wash rice or rinse-free rice can be utilized effectively, whereby a further cost reduction can be achieved while stopping environmental destruction. The biodegradable resin composition has a further reinforced effect or another additional effect, when it contains a functional organic matter derived from plants. The term "functional organic matter" means an organic matter exerting beneficial functions such as freshness keeping effect, antibacterial effect and negative ion increasing effect.

In a further aspect of the present invention, there is also provided a biodegradable resin composition, wherein the above-described functional organic matter derived from plants is one of or a combination of two or more of tea-derived substances known to have a freshness keeping effect, bamboo-derived substances such as bamboo powder and bamboo vinegar, lees of *Sasa senanensis*, wood-derived substances such as wood powder and wood vinegar, starch lees, rice lees, herb-derived substances, and kelp derived substances. The incorporation of such a substance enables to prepare a biodegradable resin composition having reinforced at least in a freshness keeping effect and thus, a high value-added functional product with a plurality of functions can be prepared. Moreover, when the above-described biodegradable resin composition contains zeolite, it has a further reinforced freshness keeping effect and molded or formed products available from the composition has increased heat resistance. Addition of silicon, on the other hand, enables to heighten both freshness keeping effect and durability of the molded or formed products.

### Best Mode for Carrying out the Invention

In this embodiment, remnants of rice washings generated in the manufacturing step of no-wash or rinse-free rice are utilized. These remnants are industrial ones. When rice bran is removed from raw material rice in plants of processing rice into no-wash or rinse-free rice, the effluent after washing of the residue with water is filtered through a filter placed at the outlet of a drain. The remnants of rice washings consist largely of these deposits on the filter. These deposits contain starch, sugar and lipid in a relatively small amount, but they are rich in cellulose most of which is derived from the outer layer tissue of rice. The remnants generated in a brewing step of quality sake from the finest rice and discharged from brewing plants or the remnants discharged from rice cracker plants can be used similarly. Although the outer layer tissue of rice is different in components, depending on the kind of the rice or depth of the layer from the surface, all the remnants can be used in the present invention, which makes it possible to use rice powder in the dry form itself (white bran) and long-stored rice, which will otherwise be discarded, after pulverization of it into a predetermined particle size. The above-described rice bran is useful as a fertilizer or feedstuff for livestock, but rice washings and their remnants are almost of no industrial value before. When they are dumped in rivers or sea, they may cause environmental destruction such as water pollution so that even money is spent to treat them as industrial waste.

Such rice washings are, prior to mixing with a biodegradable resin, solidified by drying and then, the resulting solid is pulverized into particles of a predetermined uniform size. The solid particles preferably have a particle size of from 80 to 200 mesh from the viewpoint of maintaining the physical properties of molded or formed products.

Examples of the biodegradable resin to be used in the present invention include aliphatic polyester resins such as polycaprolactone, polyethylene succinate, polybutylene succinate adipate, polybutylene adipate, polybutylene succinate, polylactic acid, polylactidic acid, polyglycolic acid and polyhydroxybutyrate/valerate copolymer, acetyl cellulose and polyvinyl alcohol.

In the present invention, it is recommended to mix (A) a substance composed mainly of remnants of rice washings and (B) the above-described biodegradable resin so that their weight ratio A:B falls within a range of from 60 to 95 : 40 to 5 based on 100 parts by weight of their total amount. When the amount of the substance (A) is less than 60 wt.%, the production cost of the biodegradable resin composition thus obtained cannot be reduced sufficiently and the resulting composition cannot easily have excellent biodegradability. The mixing ratio of the substance (A) can be raised even to 98 wt.% at most, but that not greater than 95 wt.% is presumed to be appropriate for maintaining the level of the physical properties of the molded or formed products available from the resulting biodegradable resin composition. In the background art, the mixing amount of a natural biodegradable resin such as starch with a synthetic biodegradable resin is 90 wt.% at most based on the total amount, but it can be increased according to the present embodiment. The above-described biodegradable resin composition is available in any one of the following forms such as powder, granule, pellet and liquid.

The following is one example of a preparing method of the above-described biodegradable resin composition as a resin composition in the pellet form. It is available by melting and kneading the biodegradable resin (B) at its melting point or greater in a kneader, mixing the substance (A) in the resulting kneaded mass at weight ratio (A):(B) = 60 to 95 : 40 to 5 based on 100 parts by weight of the total amount of (B) and (A), kneading the resulting mixture uniformly, and pulverizing the kneaded mass into pellets. The melting temperature of the resin (B) is preferably from 130 to 180°C. The temperature upon addition of the substance (A) to the molten resin (B) is preferably from 90 to 120°C, though the temperature of the mixture lowers a little by the addition of the substance (A). To the resin (B), the substance (A) may be added at one time or in portions. A particularly preferred kneader is a twin screw extruder. The biodegradable resin composition extruded by an extruder into strands is granulated into pellets by using a hot cutter. The pellets thus obtained are fed to a cyclone, at which the powder is removed and the pellets not containing powder are fed to a tank. There, the pellets are weighed and put into bags.

By the use of such pellets, sgricultural multisheets and packing materials can be produced at a lower cost, compared with the use of the conventional biodegradable resin. In addition, the substance (A) to be kneaded is mainly a high molecular substance having a high bonding property so that it has a good bonding property with the biodegradable resin and can be molded or formed easily. The substance (A) itself is not readily soluble in the resin (B), whereby deterioration in physical properties of the biodegradable resin can be reduced. Moreover, it exhibits excellent biodegradability after it is discarded. The melting and molding temperature of such pellets (about 130°C) is lower by about 135°C compared with that of ordinarily employed synthetic resin materials, which leads to a reduction in the energy consumption and in turn, prevention of global warming.

The pellets and the biodegradable resin molded or products prepared according to the present embodiment have freshness keeping effect and negative ion increasing effect. These effects are presumed to appear because the biodegradable resin composition has a porous structure in which fine solid particles have been bonded each other with a biodegradable resin as a binder. This structure is similar to the tissue structure of bamboo charcoal. The biodegradable resin composition contains many air bubbles presumably because of evaporation of water upon kneading at high temperature.

In the embodiment of the biodegradable resin composition having a plant-derived functional organic matter mixed therein, examples of the functional organic matter to be mixed include tea-derived substances such as tea lees and third plucked tea, bamboo-derived substances such as bamboo vinegar, bamboo powder and bamboo short fibers available by pulverizing bamboo, *Sasa senanensis* lees, wood-derived substances such as wood powder and wood vinegar, starch lees, rice lees, herb-derived substances such as pulverized dry herb, and kelp derived substances such as kelp extract and pulverized dry kelp. Such substances exhibit their respective functions smoothly by being incorporated in the porous structure as described above. For example, tea lees and bamboo powder have actions as an antioxidant or antibiotic so that the composition containing it is expected to exhibit higher freshness keeping effect and antibiotic effect. Some of these plant-derived organic matters are recognized to have a negative ion increasing effect. Pellets which are composed of a biodegradable resin material and reinforced in at least freshness keeping effect can be manufactured by using the above-described functional organic matters singly or in combination of two or more, and mixing and kneading it (or them) with the biodegradable resin, together with the substance made of industrial residues such as remnants of rice washings. In this case, the mixing ratio may be determined while regarding the total weight of the functional organic matter and remnants of washings as the weight of the substance (A) in the above-described manufacturing method. From the viewpoint of maintaining the physical properties of the biodegradable resin composition, however, it is preferred to adjust the weight of such a functional organic matter not to exceed the weight of the substance made of the remnants of the rice washings and at the same time, not to exceed 20 wt.%.

Packing sheets or bags used upon transport of fresh foods or fresh flowers which are manufactured using the pellets thus prepared are useful for preventing or retarding the quality deterioration of these goods to be transported. Food trays manufactured using the biodegradable resin composition having a strongly antibacterial organic matter mixed therein are, on the other hand, effective for preventing food poisoning. Domestic goods manufactured using the biodegradable resin composition having a reinforced negative ion increasing effect are expected to exhibit a relaxing effect or effect of alkalizing the blood of its user owing to negative ions contained in them.

Inorganic matters such as zeolite and silicon are said to have a freshness keeping effect. When pellets of a biodegradable resin composition are prepared by pulverizing such an inorganic matter into a size of about 200 mesh, and mixing it in an amount of from 0.5% to 10% in the substance (A), products obtained by molding or forming zeolite-containing pellets have increased heat resistance, while products obtained by molding or forming silicon-containing pellets have increased durability, as well as the above-described effects.

The present invention will next be described more specifically by examples. A twin-screw extruder was used as an extruder. A biodegradable resin (B) ("Enpol", trade name; an aliphatic polyester resin; product of IRe Chemical) was fed to the hopper of this extruder at a feed rate of 50 kg/hr. The cylinder was heated to 150°C. From the hopper, the above-described substance (A) made of a secondary waste and pulverized into a uniform mesh (100) was fed at a feed rate of 550 kg/hr. The screw feeder located at the center of the cylinder was heated to about 100°C. Under the above-described conditions, the resin (B) and the substance (A) were kneaded under a molten state. The kneaded mass was extruded into strands from three nozzles of 3 mm in diameter. Cooled air was applied to the extrusion section at the same time. When the extrudate became a solid, it was hot-cut, whereby a biodegradable resin composition was obtained in the form of pellets at a production rate of 600 kg/hr.

In another example, after the preparation of the above-described biodegradable resin composition, third plucked tea, which had been dried and pulverized uniformly into a size of mesh (100), was mixed as a plant-derived functional organic matter. The mixture and the substance (A) made of a secondary waste were fed at a feed rate of 10 kg/hr through the same route. Such a functional biodegradable resin material was obtained at a production rate of 610 kg/hr.

In a further example, after the preparation of the above-described biodegradable resin composition, zeolite which had been pulverized uniformly into a mesh size (200) was mixed with the substance (A) as a functional inorganic matter in an amount of 1 wt.% relative to the substance (A). Similarly, silicon which had been pulverized uniformly into a mesh size (200) was mixed with the substance (A) as a functional inorganic matter in an amount of 1 wt.% relative to the substance (A). These mixtures were pelletized, respectively.

From the respective pellets obtained in the above-described examples, test pieces of 1 mm × 50 mm × 10 mm were made using a hot press heated to 130°C. As a result of studying their strength (break test under application of loads) and biodegradability (weight change test after burying under the soil), they exhibited almost equal strength and biodegradability to those of a test piece made from pellets prepared in a similar manner to the above-described examples except for the use of 500 kg/hr of taro potato starch and 100 kg/hr of an aliphatic polyester resin, instead. The test piece made from the tea-containing pellets had a decomposition rate a little slower than that made from tea-free pellets, while the test piece made from the zeolite-containing pellets had strength about 1.2 times greater than that made from zeolite-free pellets. At a strength test in an atmosphere of 100°C, the test piece made from the silicon-containing pellets showed the highest strength.

As described above, the present invention makes it possible to actualize a cost reduction without causing deterioration in physical properties of a biodegradable resin, and at the same time to realize effective use of an industrial waste which will otherwise cause environmental destruction. Moreover, the present invention makes it possible to prepare a biodegradable resin composition of a higher value by adding thereto beneficial functions such as freshness keeping effect and negative ion increasing effect.

## Claims

1. A biodegradable resin composition, obtained by binding, with a biodegradable resin, solid particles of a predetermined particle size available by pulverizing rice having an outer layer tissue.

2. A biodegradable resin composition according to Claim 1, wherein the solid particles of a predetermined particle size are composed mainly of the outer layer tissue of rice.

3. A biodegradable resin composition according to Claim 1, wherein the solid particles of a predetermined particle size are composed mainly of white bran produced in a sake brewing step or remnants of rice washings.

4. A biodegradable resin composition according to Claim 2, wherein the solid particles of a predetermined particle size are composed mainly of white bran produced in a sake brewing step or remnants of rice washings.

5. A biodegradable resin composition according to Claim 1, 2, 3 or 4, further comprising a functional organic matter derived from a plant.

6. A biodegradable resin composition according to Claim 5, wherein the functional organic matter derived from a plant is one of or a combination of at least two of tea derived substances, bamboo derived substances, *Sasa senanensis* lees, wood derived substances, starch lees, rice bran, herb derived substances and kelp derived substances.

7. A biodegradable resin composition according to Claim 1, 2, 3 or 4, further comprising either one or both of zeolite and silicon.

8. A biodegradable resin composition according to Claim 5, further comprising either one or both of zeolite and silicon.

9. A biodegradable resin composition according to Claim 6, further comprising either one or both of zeolite and silicon.

## Amended claims

### Amended claims under Art. 19.1 PCT

**1.** (After amendment) A biodegradable resin composition obtained by binding, with a biodegradable resin, solid particles of a predetermined particle size available by pulverizing rice and composed mainly of an outer layer tissue of rice, wherein the solid particles mean rice powder from which bran has been removed by rice milling.

**2.** (Deleted)

**3.** (After amendment) A biodegradable resin composition obtained by binding, with a biodegradable resin, solid particles of a predetermined particle size available by pulverizing rice and composed mainly of an outer layer tissue of rice, wherein the solid particles are composed of a residue having, as a main component, a substance derived from the starch layer of rice available by removing bran from rice by rice milling, rinsing the residue with water, and filtering the effluent generated in the rinsing step.

**4.** (Deleted)

**5.** (After amendment) A biodegradable resin composition according to any one of Claims 1 to 3, further comprising a functional organic matter derived from a plant, said organic matter being composed of one of or a combination of at least two of tea derived substances, bamboo derived substances, *Sasa senanensis* lees, wood derived substances, starch lees, rice bran, herb derived substances and kelp derived substances.

**6.** (Deleted)

**7.** (After amendment) A biodegradable resin composition according to any one of Claims 1, 3 and 5, further comprising zeolite.

**8.** (Deleted)

**9.** (Deleted)
